# EUROPEAN PATENT APPLICATION

(11) **EP 3 223 100 A1**
(43) Date of publication of application: **27.09.2017**
(21) Application number: 16162003.4
(22) Date of filing: 23.03.2016
(51) Int. Cl.: G05D 1/02, G05D 1/04, G05D 1/06, B64C 13/16, G01P 13/02, G01P 5/00

(54) **METHOD AND SYSTEM FOR GUST SPEED ESTIMATION**

(71) Applicant: Airbus Operations GmbH, 21129 Hamburg (DE)
(72) Inventor: Giesseler, Hans-Gerd, 21129 Hamburg (DE)
(74) Representative: Isarpatent

(57) **Abstract**

A method of gust speed estimation includes obtaining instantaneous measurement values of aircraft systems, the measurement values comprising an angle-of-attack, AoA, or angle-of-sideslip, AoS, measurement value, a flight altitude measurement value, a flight path angle measurement value and a flight speed measurement value, generating state prediction values based on the obtained instantaneous measurement values, the state prediction values indicating a predicted flight induced AoA/AoS, a predicted flight altitude, a predicted load factor bias, and a predicted gust induced AoA/AoS, generating measurement prediction values based on the generated state prediction values, comparing the generated measurement prediction values with the obtained instantaneous measurement values to obtain a deviation of the generated measurement prediction values from the obtained instantaneous measurement values, and updating the generated state prediction values based on the deviation in order to obtain refined state prediction values.

## Description

### FIELD OF THE INVENTION

The present invention pertains to methods and systems directed to estimating gust speed online. Such methods and systems may be employed in gust load alleviation (GLA) systems that may use estimated gust speeds as input parameters for

### TECHNICAL BACKGROUND

Atmospheric flow disturbances, such as naturally occurring gusts and turbulences as well as wake vortices created by aircraft themselves if encountered by trailing aircraft, may adversely affect aircraft motion and flight safety. The aircraft response to flow disturbances may differ vastly depending on the type of disturbance encountered.

Flow disturbances acting on the wings of an aircraft affect the acceleration of the aircraft differently, depending on their relative direction. Horizontal head on gusts and turbulence affect the aerodynamic forces mainly due to dynamic pressure variations. Lateral gusts and turbulence generate lateral effects through gust induced variation of angle of sideslip (AoS). Vertical atmospheric currents, however, directly change the angle of attack (AoA - the angle between the direction of air motion relative to the aircraft and a surface that on the one hand coincides with the fuselage datum line and which is on the other hand perpendicular to the aircraft plane of symmetry). Such changes in the AoA are more severe with regard to load factor variations. While vertical gusts may adversely affect passenger comfort, they may also be responsible for the creation of significant and undesirable loads on the airframe, especially wing loads.

The gust speed estimation is an extension of the Flight Path Reconstruction (FPR) approach, a method that is free from aircraft's aerodynamic and thrust modelling and is typically applied to flight data in order to eliminate noise and bias from the data, as for example explained in Ravindra V. Jategaonkar, AIAA Series: Progress in Astronautics and Aeronautics (Book 216), "Flight Vehicle System Identification", August 2006, and by Braga De Mendonça, C.; Moreira Hemerly, E.; Sandoval Goes, L.: "Adaptive Stochastic Filtering for Online Aircraft Flight Path Reconstruction", Journal of Aircraft, Vol. 44, No. 5 (2007), pp. 1546-1558. However, conventional FPR procedures operate under the assumption of calm air. The effects of flow turbulences need to be separately addressed in order to eliminate gust and turbulence induced effects on AoA measurements. In controlling aircraft motion and loads, gust load alleviation (GLA) systems use conventional lift control members (like spoiler, aileron, elevator), but also for example specific fast flaps mounted at the landing flap's trailing edge that enable rapid variation of wing camber. Such systems require exact knowledge of rapid changes in lift induced by gusts and turbulence which may be extracted from measurements of AoA sensors, such as AoA vanes. As exemplarily described in document US 3,814,912 A, determination of the gusts speed from the AoA measurements is therefore desirable when calculating the required lift control surface deflection in GLA systems.

Hoffmann, A.; Loftfield, K; Luckner, R.: "Broadband Wind Estimation Algorithm for Gust Load Alleviation" in: Advances in Aerospace Guidance, Navigation and Control - Selected Papers of the 1st CEAS Specialist Conference on Guidance, Navigation and Control, Vol. III, ed. Holzapfel/Theil, Springer 2011, pp. 321-332 discloses methods to determine vertical gusts and turbulence for implementation in a gust load alleviation system based on feed forward control, using a linear aircraft model of the longitudinal aircraft motion combined with the Dryden Turbulence Model within a Kalman filter framework.

DE 10 2005 058 081 A1 discloses methods for reconstructing gusts and/or structural loads at passenger aircraft, including generating an observer on the basis of a nonlinear model of the aircraft which describes the movement of the aircraft in all six degrees of freedom (DoF) and the elastic motion of the aircraft structure, continuously supplying all the data and measurements substantial for the description of the state of the aircraft to the observer, and calculating the gust velocities and structural loads by the observer from the supplied data and measurements.

Sreeja, S.; Dinesh Pai, A.; Lalithambika, V.; Sivan, K.: "Launch Vehicle Trajectory Reconstruction Considering Wind Estimation from Flight Data Using Kalman Filter", 2005 2th International Conference on Electrical Engineering/Electronics, Computer, Telecommunications and Information Technology (ECTI-CON 2005), Vol. 1, pp. 613-616, May 2005 discloses a scheme for the reconstruction of a launch vehicle trajectory using a Kalman Filter that is designed to estimate the wind-induced angle of attack and a subsequent determination of the actual wind velocity for the trajectory reconstruction base on the estimated wind-induced angle of attack.

### SUMMARY OF THE INVENTION

One of the objects of the invention thus is to find solutions for precise, reliable and cost-efficient methods for reconstructing gusts and turbulences online.

This and other objects are solved by a method for gust speed estimation having the features of claim 1, a system for gust speed estimation having the features of claim 8, and non-transitory computer-readable storage medium having the features of claim 15.

According to a first aspect of the invention, a method for gust speed estimation includes the steps of obtaining instantaneous measurement values of aircraft systems, the measurement values comprising an angle-of-attack, AoA, or angle-of-sideslip, AoS, measurement value, a flight altitude measurement value, a flight path angle measurement value and a flight speed measurement value, generating state prediction values based on the obtained instantaneous measurement values, the state prediction values indicating a predicted flight induced AoA or AoS, a predicted flight altitude, a predicted load factor bias, and a predicted gust induced AoA or AoS, generating measurement prediction values based on the generated state prediction values, comparing the generated measurement prediction values with the obtained instantaneous measurement values to obtain a deviation of the generated measurement prediction values from the obtained instantaneous measurement values, and updating the generated state prediction values based on the deviation in order to obtain refined state prediction values.

According to a second aspect of the invention, a system for gust speed estimation includes an aircraft systems interface configured to obtain instantaneous measurement values of aircraft systems, the measurement values comprising an angle-of-attack, AoA, or angle-of-sideslip, AoS, measurement value, a flight altitude measurement value, a flight path angle measurement value and a flight speed measurement value, a predictor stage coupled to the aircraft systems interface, the predictor stage being configured to generate state prediction values based on the obtained instantaneous measurement values, the state prediction values indicating a predicted flight induced AoA or AoS, a predicted flight altitude, a predicted load factor bias, and a predicted gust induced AoA or AoS, a measurement filter coupled downstream to the predictor stage, the measurement filter being configured to generate measurement prediction values based on the generated state prediction values, a comparator stage coupled to the aircraft systems interface and the measurement filter, the comparator stage being configured to compare the generated measurement prediction values with the obtained instantaneous measurement values and to output a deviation of the generated measurement prediction values from the obtained instantaneous measurement values, and an updating stage coupled to the comparator stage, the updating stage being configured to update the generated state prediction values based on the deviation and to output refined state prediction values.

According to a third aspect of the invention, a non-transitory computer-readable storage medium stores computer-readable instructions the execution of which on a data processing system cause the data processing system to perform the steps of the method for gust speed estimation according to the first aspect of the invention.

One of the aims of the present invention is to implement a Kalman filter based solution of an estimation problem that involves flight mechanical and air data measurements for online gust reconstruction. The gust reconstruction utilizes a measured angle-of-attack (AoA) or angle-of-sideslip (AoS) sensor value and compensates the measured AoA/AoS sensor value for an AoA/AoS share caused by gusts and turbulence. For vertical gusts, the AoA measurement values are the relevant values, while for lateral gusts, the AoS are determinative. The solution is simplified to be compatible with restraints in computational resources allotted for flight control computers. Thus, the suggested method for gust speed estimation may be used during flight of an aircraft for a real-time estimation of gust speeds and for online parametrization of gust load alleviation (GLA) systems in an aircraft.

An advantage of the present solution is that the approach does not rely on complex aerodynamic models and engine-thrust modelling, thereby getting rid of any uncertainties incurred by those models. Moreover, the reduction in complexity due to avoiding aerodynamic models advantageously allows for online application and implementation of the online computation method in electronic flight control systems (EFCS), thus enabling stable gust alleviation throughout the whole flight envelope of an aircraft.

The use of simplified Kalman filter topology (or an extended Kalman filter structure) as an embedded filtering structure in gust speed estimation systems allows for the implementation of an estimation algorithm that may be executed with commercially available, resource efficient and thus very fast calculation tools, such as for example SCADE, for improving existing applications.

Advantageous variations and developments may be gathered from the dependent claims as well as from the description in conjunction with the drawings.

According to some embodiments, the method may further comprise weighting the deviation on the basis of instantaneous flight parameters, and gain scheduling the updating step according to the weighted deviation. By taking into account real-time flight parameters, complex aerodynamic modelling may be advantageously obviated. In some embodiments, the instantaneous flight parameters may include the aircraft flight speed, an angle-of-sideslip (AoS), a roll rate, a yaw rate, a bank angle, a pitch angle, a vertical load factor, a pressure altitude and/or a glide path slope.

According to some further embodiments, the method may further comprise determining a gust speed estimate from the refined predicted flight induced AoA/AoS and the refined predicted gust induced AoA/AoS. This determination may be advantageously done in a connected gust load alleviation system that may utilize the determined gust speed estimate further for improved lift flap control. According to some further embodiments, the method may further comprise estimating a sensor bias value of an AoA or AoS sensor of the aircraft systems indicating quasistatic sensor bias and correcting the gust speed estimate on the basis of the estimated sensor bias value, for example when using an AoA or AoS vane as AoA/AoS sensor. Preferably, the measurement values may be taken from sensors located at the aircraft nose like vanes or 5-hole probes, or the measurement values may be obtained by LIDAR (Light detection and ranging), measuring the gust speed ahead of the aircraft nose. Flight speed measurement values may include a total flight speed and vertical component, the latter being obtained for example from a GPS system. Advantageously, low frequency signal portions of the sensor value may be accounted for, specifically those of not perfectly calibrated sensors such as vanes.

According to some embodiments, the system may further comprise gain setting stage coupled between the comparator stage and the updating stage, the gain setting stage being configured to weight the deviation on the basis of instantaneous flight parameters, and to output a deviation based gain scheduling value to the updating stage, the updating stage being further configured to update the generated state prediction values based on the gain scheduling value. The gain setting stage may advantageously implement the application of a Kalman gain matrix on the innovation values as obtained from the comparator stage. The instantaneous flight parameters may in some embodiments include the aircraft flight speed, an angle-of-sideslip (AoS), a roll rate, a yaw rate, a bank angle, a pitch angle, a vertical load factor, a pressure altitude and/or a glide path slope.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a system for gust speed estimation according to an embodiment.
Fig. 2 schematically illustrates a method for gust speed estimation according to another embodiment.
Fig. 3 schematically illustrates a computer-readable storage medium according to yet another embodiment.

### DETAILED DESCRIPTION OF EMBODIMENTS OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

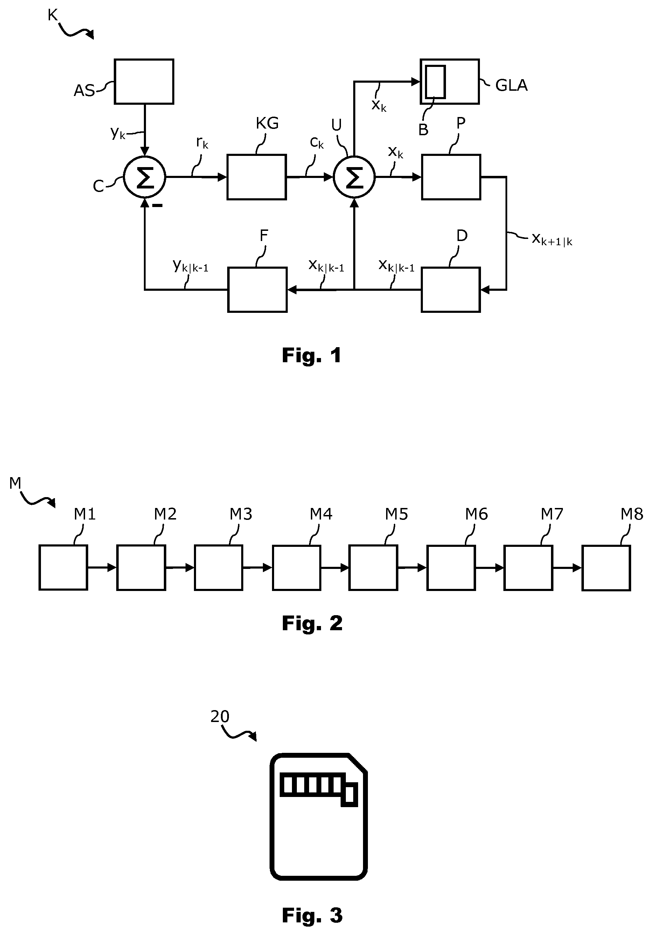

Fig. 1 schematically illustrates a block diagram of a system K for gust speed estimation. The system K may in particular be at least partly implemented as Kalman filter structure or as extended Kalman filter structure. The system comprises an aircraft systems interface coupled to aircraft systems AS that provide measurement values of flight sensors and similar air data measurement devices. The aircraft systems interface feeds a first input of a comparator stage C which is coupled to a downstream gain setting stage KG, the gain setting stage KG being fed with instantaneous flight parameters such as the aircraft flight speed, an angle-of-sideslip (AoS), a roll rate, a yaw rate, a bank angle, a pitch angle, a vertical load factor, a pressure altitude and/or a glide path slope. Furthermore, the instantaneous flight parameters may comprise a distance between the centre of gravity of the aircraft and the respective locations of the aircraft sensors, particularly the sensors for AoA or AoS measurements, in order to determine the impact of the pitch and yaw effects on the AoA or AoS measurements. Downstream of the gain setting stage KG an updating stage U is coupled between the output of the gain setting stage KG and an output of a delay stage D on one hand, and the input of a gust load alleviation system GLA interface and the input of a predictor stage P on the other hand. The output of the predictor stage P is coupled to an input of the delay stage D. The output of the delay stage D is further coupled to a measurement filter F, the output of which is in turn fed back to a second input of the comparator stage C.

The comparator stage C, the gain setting stage KG, the updating stage U, the predictor stage P, the delay stage D and the measurement filter F may be implemented as part of an (extended) Kalman filter structure. Thus, the gain setting stage KG may in particular implement a Kalman gain matrix being applied on a state covariance matrix as predicted and updated in the Kalman filter in steps of a Kalman step counter, generally denoted as k. Using this notation, a step k-1 precedes a instantaneous step k which in turn precedes a Kalman step k+1. The notation with the indices "k+1|k" is used to indicate a prediction at step k+1 under the assumption of having considered all previous time steps up to and including time step k. It may also be possible to use another type of state observer, such as for example a Luenberger observer or a sliding mode observer, for implementation of the gain setting stage KG.

At step counter value k, the system uses instantaneously known measurement values yₖ of aircraft systems, particularly the measured AoA/AoS, the measured flight altitude, the measured flight patch angle and the measure vertical speed of the aircraft to model state estimation values x_{k|k} base thereupon. The state estimation values x_{k|k} are input to a Kalman predictor stage P which generates predicted state estimation values x_{k+1|k}, including a predicted flight induced AoA/AoS, a predicted flight altitude, a predicted load factor bias, and a predicted gust induced AoA/AoS. The predicted load factor bias may be a predicted vertical load factor bias in case of an AoA/AoS determination. The predicted flight induced AoA/AoS and the predicted gust induced AoA/AoS in sum are a predicted value of an AoA/AoS sensor measurement, where the gust induced AoA/AoS is the portion of the AoA/AoS sensor measurement value that is attributed to estimated vertical gusts acting on the aircraft, and the flight induced AoA/AoS is the portion of the AoA/AoS sensor measurement value that is attributed to the theoretical AoA/AoS sensor measurement value in a calm air flight situation.

The predicted state estimation values x_{k+1|k} are delayed in the delay stage D to be able to synchronously feed them back into the Kalman update loop in which the prediction is validated, corroborated and adjusted for any deviation from the actual measurement values. For purposes of validation of the prediction, a measurement filter F includes a state equation which calculates expected or predicted measurement values y_{k|k-1} from the predicted state estimation values x_{k|k-1}. The predicted measurement values y_{k|k-1} are then fed into the comparator stage C where a difference between the predicted measurement values y_{k|k-1} and the actual measurement values y_{k|k-1} is formed as innovation value rₖ. The innovation (sometimes called measurement residual) characterizes the quality of the prediction in terms of the accuracy of reflection of the real-time measurement.

In the gain setting stage KG, the innovation or residual rₖ may be weighted by a Kalman gain matrix (or otherwise determined using a Luenberger or sliding mode observer) to generate a correction factor cₖ which is then added to the predicted state estimation values x_{k|k-1} at the updating stage U. The Kalman gain matrix may in particular be calculated depending on the aircraft flight speed, an angle-of-sideslip, a roll rate, a yaw rate, a bank angle, a pitch angle, a vertical load factor, a pressure altitude and/or a glide path slope of the aircraft.

The application of the correction factor cₖ updates the predicted state estimation values to generate updated and improved state estimation values xₖ which may then be used for prediction of further state estimation values x_{k+1|k} in the predictor stage P. The updated state estimation values xₖ are further fed to a gust load alleviation system GLA which may use the state estimation values including the predicted flight induced AoA/AoS and the predicted gust induced AoA/AoS for decontamination of AoA/AoS sensor measurement values. The AoA/AoS sensors may for example be AoA/AoS vanes at the nose of the aircraft, but it may also be possible to use other mechanical or electronic probes such as 5-hole probes or even LIDAR measurement values from the aircraft systems. As detailed earlier, the AoA/AoS sensor measurement values include the flight induced AoA/AoS including the motion of the aircraft and pitch/yaw rate effects at the nose of the aircraft, depending on the distance between the centre of gravity of the aircraft (which may be subject to changes during flight) and the location of the AoA/AoS sensors. The actual measurement values moreover contain any gust induced AoA/AoS as well as inherent bias portions due to slight miscalibration of the AoA/AoS sensor. A bias elimination system B may be provided in the GLA system to remove the bias induced portion in the AoA/AoS sensor measurement value. With the separation of flight induced AoA/AoS and gust induced AoA/AoS, the GLA system may determine the gust speed from the equivalent apportionment of the measured AoA/AoS. The bias elimination system B may for example comprise a lowpass filter or specific FIR filters, such as for example a rolling average filter.

The prediction model of the predictor stage P may be boiled down for online applicability. In particular, the prediction model may only account for stationary aircraft data as well as measurable flight and air data information. Specifically, engine thrust models and aerodynamic parameters need not to be taken into account for the prediction model. If elastic modes are excited, the AoA/AoS sensor measurement values may comprise an elastic mode excitation portion. Such a portion may be accounted for using a modal model for the relevant modes (Eigenforms) which may for example be obtained from aeroelastic modelling or from on-line identification.

Moreover, the determination procedure may be used for either vertical or lateral gust estimation: For lateral gust speed elimination, the separation of the influence on the angle-of-sideslip (AoS) for aircraft and lateral gusts may be more difficult than for the influence on the angle-of-attack (AoA); however, boundary conditions in the gust induced AoS portion may facilitate estimation thereof. For example, the integral over the estimate of the gust induced AoS portion should yield zero when contemplated over an extended period of time.

Fig. 2 schematically illustrates a block diagram of procedural stages in a method M for gust speed estimation. The method M may in particular be used in an online algorithm for gust speed estimation and concomitant gust load alleviation during flight of an aircraft in real-time. The method M may be implemented using a system including a Kalman filter K as illustrated and explained in conjunction with Fig. 1.

In a first step M1, the method M includes obtaining M1 instantaneous measurement values of aircraft systems AS, for example via an aircraft systems interface. The measurement values may for example include an angle-of-attack (AoA) or angle-of-sideslip (AoS) measurement value, a flight altitude measurement value, a flight path angle measurement value and a flight speed measurement value. In a second step M2, state prediction values are generated on the basis of the obtained instantaneous measurement values. The state prediction values indicate a predicted flight induced AoA/AoS, a predicted flight altitude, a predicted load factor bias, and a predicted gust induced AoA/AoS. The predicted load factor bias may be a predicted vertical load factor bias in case of vertical gust speed estimation.

Those generated state prediction values are used to generate measurement prediction values based on the generated state prediction values in a third step M3. The generated measurement prediction values are compared in a fourth step M4 with the obtained instantaneous measurement values to obtain a deviation of the generated measurement prediction values from the obtained instantaneous measurement values. Based on the determined deviation in the comparison, the generated state prediction values are updated in a fifth step M5 in order to obtain refined state prediction values.

Optionally, a sixth step M6 may be performed to weight the deviation on the basis of one or more instantaneous flight parameters, such as for example aircraft flight speed, angle-of-sideslip, roll rate, yaw rate, bank angle, pitch angle, vertical load factor, pressure altitude and glide path slope which may all be obtained from available aircraft system measurements. The weighted deviation may then be used in a seventh step M7 to gain schedule the updating step M5. Furthermore, a gust speed estimate may be determined in an eighth step M8, using the refined predicted flight induced AoA/AoS and the refined predicted gust induced AoA/AoS. such gust speed estimate determinations may be performed in a gust load alleviation system GLA which may also correct the gust speed estimate on the basis of an estimated sensor bias value of an AoA/AoS sensor of the aircraft systems AS, such as for example an AoA/AoS vane, a 5-hole probe, multiple AoA/AoS probes or a LIDAR measurement.

Fig. 3 schematically illustrates a non-transitory computer-readable storage medium 20 which stores computer-readable instructions the execution of which on a data processing system cause the data processing system to perform the steps of a method for gust speed estimation, particularly the method M as exemplarily explained and illustrated in conjunction with Fig. 2. The storage medium 20 may for example be a USB flash storage, a floppy disk (FD), a compact disc (CD), a digital versatile disc (DVD) or any other suitable data storage medium.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### LIST OF REFERENCE NUMERALS

- 20: Storage medium
- AS: Aircraft systems
- B: Bias elimination system
- C: Comparator stage
- cₖ: Correction factor
- D: Delay stage
- F: Measurement filter
- GLA: Gust load alleviation system
- K: Kalman filter
- KG: Gain setting stage
- k: Filter step counter
- M: Method
- M1: Method step
- M2: Method step
- M3: Method step
- M4: Method step
- M5: Method step
- M6: Method step
- M7: Method step
- M8: Method step
- P: Predictor stage
- rₖ: Innovation
- U: Updating stage
- x_{k|k}: State estimate value
- x_{k+1|k}: State prediction value
- x_{k|k-1}: Delayed state prediction value
- yₖ: State measurement value
- Y_{k|k-1}: State measurement prediction value

## Claims

1. Method (M) for gust speed estimation, the method (M) comprising:
obtaining (M1) instantaneous measurement values of aircraft systems (AS),
the measurement values comprising an angle-of-attack, AoA, or angle-of-sideslip, AoS, measurement value, a flight altitude measurement value, a flight path angle measurement value and a flight speed measurement value;
generating (M2) state prediction values based on the obtained instantaneous measurement values, the state prediction values indicating a predicted flight induced AoA or AoS, a predicted flight altitude, a predicted vertical load factor bias, and a predicted gust induced AoA or AoS;
generating (M3) measurement prediction values based on the generated state prediction values;
comparing (M4) the generated measurement prediction values with the obtained instantaneous measurement values to obtain a deviation of the generated measurement prediction values from the obtained instantaneous measurement values; and
updating (M5) the generated state prediction values based on the deviation in order to obtain refined state prediction values.

2. Method (M) according to claim 1, further comprising:
weighting (M6) the deviation on the basis of instantaneous flight parameters; and
gain scheduling (M7) the updating step (M5) according to the weighted deviation.

3. Method (M) according to claim 2, wherein the instantaneous flight parameters comprise one or more of the aircraft flight speed, an angle-of-sideslip, AoS, a roll rate, a yaw rate, a bank angle, a pitch angle, a vertical load factor, a pressure altitude and a glide path slope.

4. Method (M) according to one of the claims 1 to 3, further comprising:
determining (M8) a gust speed estimate from the refined predicted flight induced AoA or AoS and the refined predicted gust induced AoA or AoS.

5. Method (M) according to claim 4, further comprising:
estimating a sensor bias value of an AoA or AoS sensor of the aircraft systems (AS) and correcting the gust speed estimate on the basis of the estimated sensor bias value.

6. Method (M) according to claim 5, wherein the AoA or AoS sensor comprises an AoA or AoS vane or a 5-hole probe.

7. Use of a method (M) according to one of the claims 1 to 6 for real-time estimation of gust speeds during flight of an aircraft.

8. System (K) for gust speed estimation, comprising:
an aircraft systems (AS) interface configured to obtain instantaneous measurement values of aircraft systems (AS), the measurement values comprising an angle-of-attack, AoA, or angle-of-sideslip, AoS, measurement value, a flight altitude measurement value, a flight path angle measurement value and a flight speed measurement value;
a predictor stage (P) coupled to the aircraft systems interface, the predictor stage (P) being configured to generate state prediction values based on the obtained instantaneous measurement values, the state prediction values indicating a predicted flight induced AoA or AoS, a predicted flight altitude, a predicted vertical load factor bias, and a predicted gust induced AoA or AoS;
a measurement filter (F) coupled downstream to the predictor stage (P), the measurement filter (F) being configured to generate measurement prediction values based on the generated state prediction values;
a comparator stage (C) coupled to the aircraft systems interface and the measurement filter (F), the comparator stage (C) being configured to compare the generated measurement prediction values with the obtained instantaneous measurement values and to output a deviation of the generated measurement prediction values from the obtained instantaneous measurement values; and
an updating stage (U) coupled to the comparator stage (C), the updating stage (U) being configured to update the generated state prediction values based on the deviation and to output refined state prediction values.

9. System (K) according to claim 8, further comprising:
a gain setting stage (KG) coupled between the comparator stage (C) and the updating stage (U), the gain setting stage (KG) being configured to weight the deviation on the basis of instantaneous flight parameters, and to output a deviation based gain scheduling value to the updating stage (U), the updating stage (U) being further configured to update the generated state prediction values based on the gain scheduling value.

10. System (K) according to claim 9, wherein the instantaneous flight parameters comprise one or more of the aircraft flight speed, an angle-of-sideslip, AoS, a roll rate, a yaw rate , a bank angle, a pitch angle, a vertical load factor, a pressure altitude and a glide path slope.

11. System (K) according to one of the claims 8 to 10, further comprising:
a gust load alleviation, GLA, system connected to the updating stage (U), the GLA system configured to determine a gust speed estimate from the refined predicted flight induced AoA or AoS and the refined predicted gust induced AoA or AoS.

12. System (K) according to one of the claims 8 to 11, the GLA system being further configured to estimate a sensor bias value of an AoA or AoS sensor of the aircraft systems (AS) and to correct the gust speed estimate on the basis of the estimated sensor bias value.

13. System (K) according to claim 12 wherein the AoA sensor comprises an AoA vane or a 5-hole probe.

14. Use of a Kalman filter in a system (K) for gust speed estimation according to one of the claims 8 to 13.

15. Non-transitory, computer-readable storage medium (20) storing computer-readable instructions the execution of which on a data processing system cause the data processing system to perform the steps of the method (M) for gust speed estimation according to one of the claims 1 to 6.
